Europäisches Patentamt

European Patent Office

Office européen des brevets

(19)

(11) Veröffentlichungsnummer: **0 139 780**

**B1**

(12) **EUROPÄISCHE PATENTSCHRIFT**

(45) Veröffentlichungstag der Patentschrift:
**21.09.88**

(21) Anmeldenummer: **83110802.2**

(22) Anmeldetag: **28.10.83**

(51) Int. Cl.⁴: **B 65 G 51/02,** B 01 J 3/04

(54) **Vorrichtung zum Transport von Körpern mittels einer in einer Rohrleitung strömenden Flüssigkeit.**

(43) Veröffentlichungstag der Anmeldung:
**08.05.85 Patentblatt 85/19**

(45) Bekanntmachung des Hinweises auf die Patenterteilung:
**21.09.88 Patentblatt 88/38**

(84) Benannte Vertragsstaaten:
**AT BE CH DE FR GB IT LI NL SE**

(56) Entgegenhaltungen:
**DE-A-2 461 539
FR-A-2 173 793
GB-A-633 779
US-A-2 799 540
US-A-4 372 918**

(73) Patentinhaber: **Bolz, Alfred, Uhlandweg 25, D-7988
Wangen im Allgäu (DE)**
Patentinhaber: **Boos, Günther, Dipl.- Ing.,
Stephanusstrasse 2, D-7989 Argenbühl- Eisenharz
(DE)**

(72) Erfinder: **Bolz, Alfred, Uhlandweg 25, D-7988
Wangen im Allgäu (DE)**
Erfinder: **Boos, Günther, Dipl.- Ing.,
Stephanusstrasse 2, D-7989 Argenbühl- Eisenharz
(DE)**

(74) Vertreter: **Wolf, Eckhard, Patentanwalt Dr.- Ing.
Eckhard Wolf Postfach 13 10 01, D-7000 Stuttgart
1 (DE)**

EP 0 139 780 B1

LIBER, STOCKHOLM 1988

**Beschreibung**

Die Erfindung betrifft eine Anlage der im Oberbegriff des Patentanspruchs 1 angegebenen Gattung.

Eine Anlage dieser Art ist beispielsweise aus der US-A-2 799 540 bekannt. Im Gegenseatz zu dieser bekannten Anlage, die zum Flößen von Baumstämmen dient, ist die Anlage gemäß der Erfindung zum Transport von kleineren Körpern, wie z.B. von eine geometrisch definierte Gestalt aufweisenden Kunststoffkörpern, Lebensmittelpackungen und dergleichen bestimmt, die in einem von Flüssigkeit durchströmten Rohrleitungssystem einer Druck- oder auch Wärmebehandlung, beispielsweise auch einem Polymerisationsprozess unterworfen werden. Diese Behandlung soll gemäß der der Erfindung zugrundeliegenden Aufgabe weitgehend wartungsfrei durchgeführt werden, wobei die Bedingungen, denen diese Körper unterworfen werden, beispielsweise die Temperatur und der Druck, den Körpern angepasst werden können.

Diese Aufgabe wird gemäß der Erfindung mit einer Anlage gelöst, die die kennzeichnenden Merkmale des Anspruchs 1 aufweist.

Vorteilhafte Weiterentwicklungen dieser Anlage, bei der die Körper beispielsweise Teilstrecken des Rohrleitungs-Systems mit unterschiedlicher Geschwindigkeit durchlaufen oder auch in einer Teilstrecke eine bestimmte Zeit verweilen, ergeben sich aus den Unteransprüchen.

In der Zeichnung sind Ausführungsbeispiele der erfindungsgemäßen Anlage in schematischer Weise dargestellt. Es zeigen

Fig. 1 eine Anlage mit einer am Ende des Rohrleitungssystems angeordneten, zur Aufrechterhaltung eines bestimmten Drucks in den Rohrleitungen dienenden, entgegen der Strömungsrichtung der Transportflüssigkeit wirkenden Strahlpumpe,

Fig. 2 eine Anlage mit zwei in Strömungsrichtung der Transportflüssigkeit wirkenden Strahlpumpen,

Fig. 3 eine Anlage gemäß Fig. 1, bei der an den Treibflüssigkeitskreislauf der eingangsseitigen Strahlpumpe eine Druck- oder Saugleitung angeschlossen ist,

Fig. 4 eine Anlage mit zwei Rohrleitungssträngen zur chargenweisen Einschleusung der Körper,

Fig. 5 eine Strahlpumpe mit einer an die Ansaugkammer angeschlossenen Rücklaufleitung für einen von der Transportflüssigkeit abgezweigten Teilstrom,

Fig. 6 eine in eine geradlinige Teilstrecke des Rohrleitungssystems eingebaute Strahlpumpe mit Ringdüse,

Fig. 7a eine Strahlpumpe, bei der ein von der Transportflüssigkeit in der Ansaugkammer abgezweigter Teilstrom in die Treibflüssigkeitsdüse eingeleitet wird,

Fig. 7b einen Schnitt durch die in Fig. 7a dargestellte Strahlpumpe,

Fig. 8 den Querschnitt einer Rohrleitung mit einem Ausführungsbeispiel der in die Rohrleitung eingeschobenen Führung für die zu transportierenden Körper,

Fig. 9 einen Schnitt durch die Kammer einer Strahlpumpe mit einer durch Stäbe gebildeten korbartigen Führung für die zu transportierenden Körper,

Fig. 10 eine gegenüber der in Fig. 1 dargestellten Anlage abgeänderte Anlage.

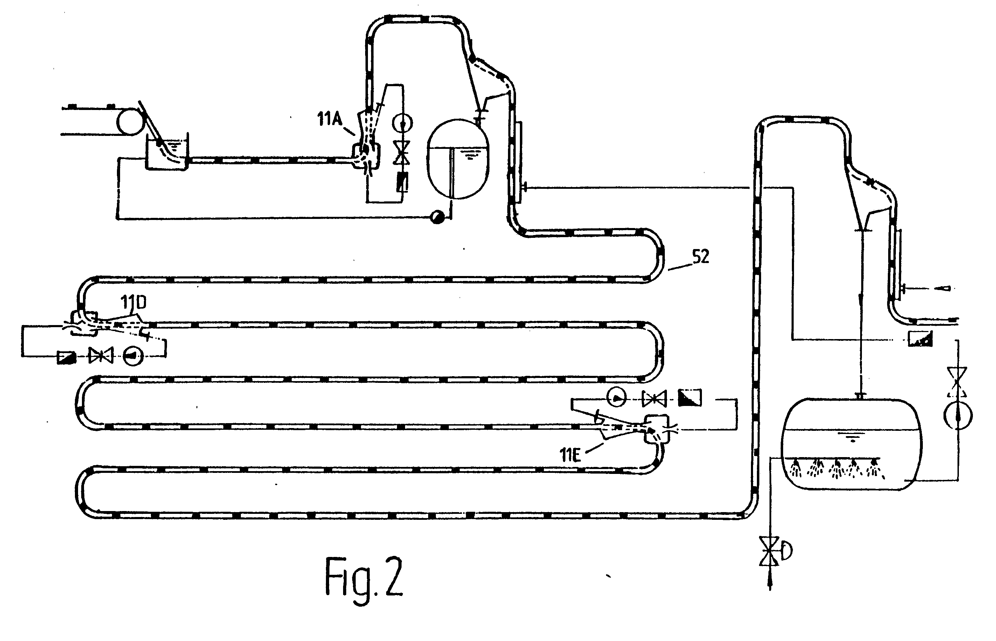

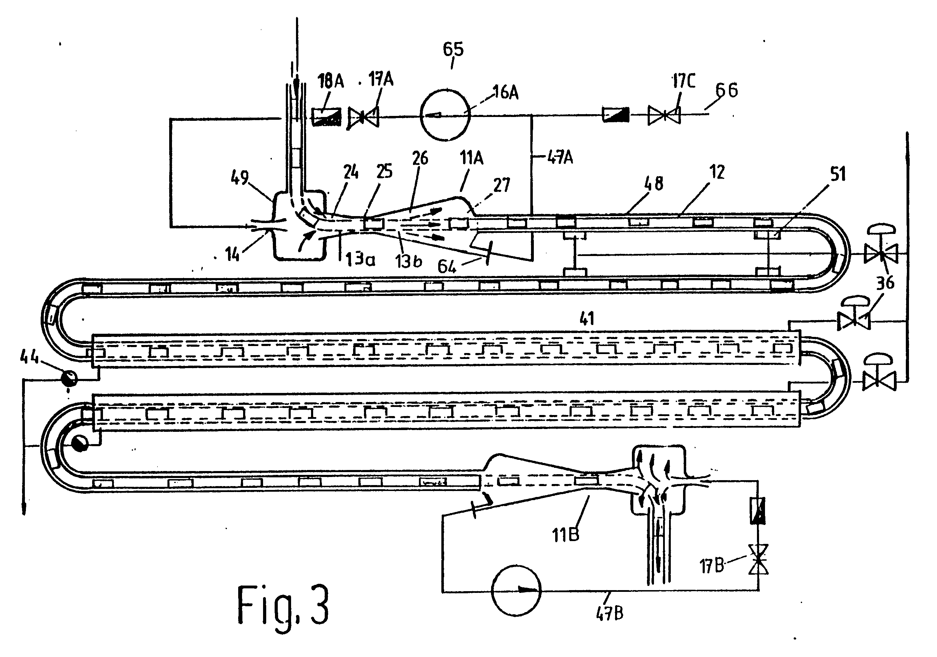

Auf dem über eine Umlenkrolle 2 geführten Förderband 1A werden die Körper 3 der Anlage zugeführt. Die Körper gelangen über die Einlaufrutsche 4 in das in dem Wasserkasten 5 angeordnete Einschleusrohr 7, dessen Öffnung 60 sich unter dem Flüssigkeitsspiegel 6 befindet. In dem Einschleusrohr 7 entsteht durch die Saugwirkung der Strahlpumpe 11A eine Strömung, die die Körper 3 über die Rückschlagklappe 61 durch die Strahlpumpe 11A hindurch in das Rohr 48 fördert. Wie aus Fig. 3 ersichtlich ist, wird die von der Pumpe 16A geförderte Treibflüssigkeit über die Düse 14 in die Kammer 49 der Strahlpumpe 11A eingeleitet. Die Pumpe 16A ist mit dem ihr nachgeschalteten Regulierventil 17A und dem Durchflußmesser 18A in eine als Ringleitung ausgebildete Leitung 47A eingeschaltet, die den Diffusor 26 mit der Düse 14 verbindet. Die in der Leitung 47A umlaufende Menge der Treibflüssigkeit bestimmt bei konstantem Gegendruck die Menge der angesaugten Transportflüssigkeit bzw. bei gleicher Menge der angesaugten Transportflüssigkeit den Druckaufbau in dem an die Strahlpumpe 11A angeschlossenen Rohr 48. Um im Betrieb der Anlage eine bestimmte Geschwindigkeit der Transportflüssigkeitsströmung und gleichzeitig im Transportrohr 48 einen bestimmten Druck einstellen bzw. aufrechterhalten zu können, ist die Strahlpumpe 11A mit einer zweiten entgegenwirkenden Wasserstrahlpumpe 11B gekoppelt. Werden die Regulierventile 17A und 17B so betätigt, daß die Änderung der Menge der die Leitungen 47A und 47B durchströmenden Flüssigkeit gleich groß ist, dann verändert sich nur der Druck im Transportrohr 48 zwischen den beiden Strahlpumpen 11A und 11B, die Strömungsgeschwindigkeit der Transportflüssigkeit bleibt jedoch konstant. Wie aus Fig. 2 ersichtlich ist, können, falls in dem Rohrleitungssystem mehrere Druckstufen benötigt werden, mehrere derartige Strahlpumpenpaare eingebaut werden.

Wenn die Menge der in der Leitung 47A umlaufenden Treibflüssigkeit bei geschlossenem Ventil 17C der an die Leitung 47A angeschlossenen Druck- bzw. Saugleitung (Fig. 3) konstant gehalten wird, ändert sich die Menge der geförderten Transportflüssigkeit und die Geschwindigkeit der Transportflüssigkeit zwischen den beiden Strahlpumpen 11A und 11B

nicht. Wird über das Ventil 11C Treibflüssigkeit abgesaugt, fließt im Rohr 48 weniger Flüssigkeit, und die Geschwindigkeit der Transportflüssigkeit nimmt entsprechend ab. Wird über das Ventil 17C Flüssigkeit in die Ringleitung 47A eingespeist, nimmt die Geschwindigkeit der Transportflüssigkeit zu.

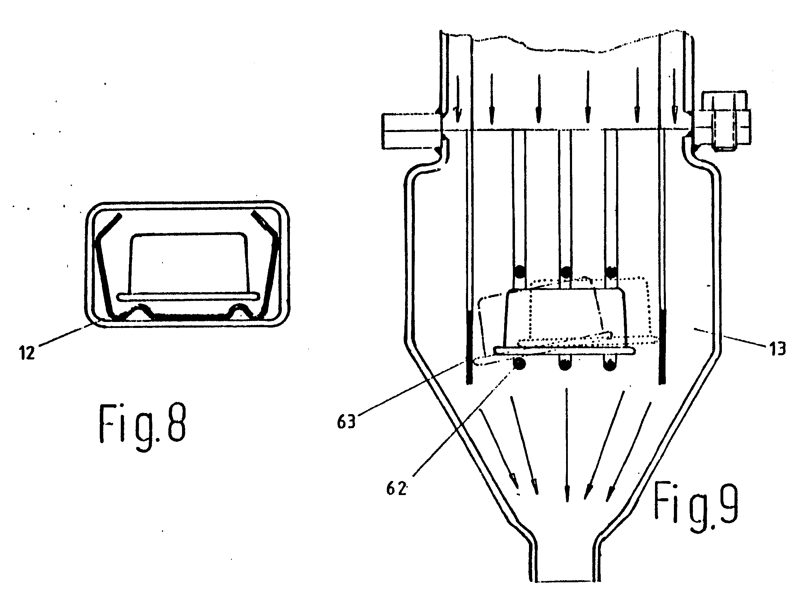

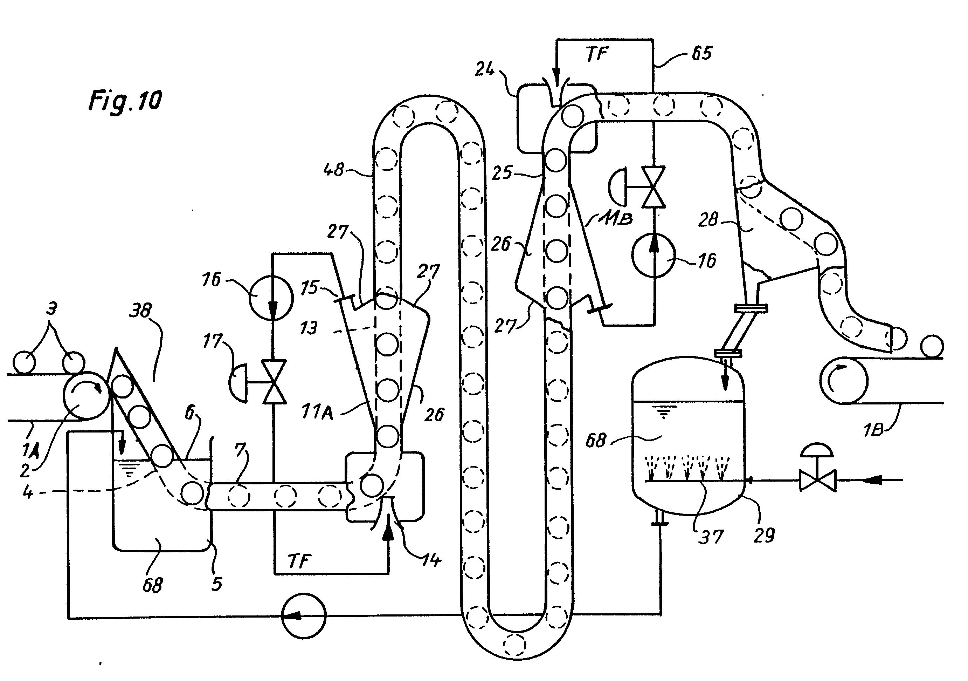

Um den Wirkungsgrad der Strahlpumpen nicht zu beeinträchtigen, und trotzdem eine mehr oder weniger reibungsfreie Führung der Körper 3 in der Ansaug-Kammer 49, in deren sich verengender Treibdüse 24, in der sich daran anschließenden zylindrischen Fangdüse 25, in dem Diffusor 26 und dessen übergangsstück 27 zu gewährleisten, muß diese Führung 12 bzw. 13, wie in Fig. 8 und 9 dargestellt, unterbrochen ausgeführt sein. Damit diese Führung einen möglichst geringen Strömungswiderstand aufweist, besteht sie, wie in Fig. 9 dargestellt, aus Rundstäben 62 und/oder Flachstäben 63, die so angeordnet sind, daß sie die Körper 3 mit Spiel umschließen.

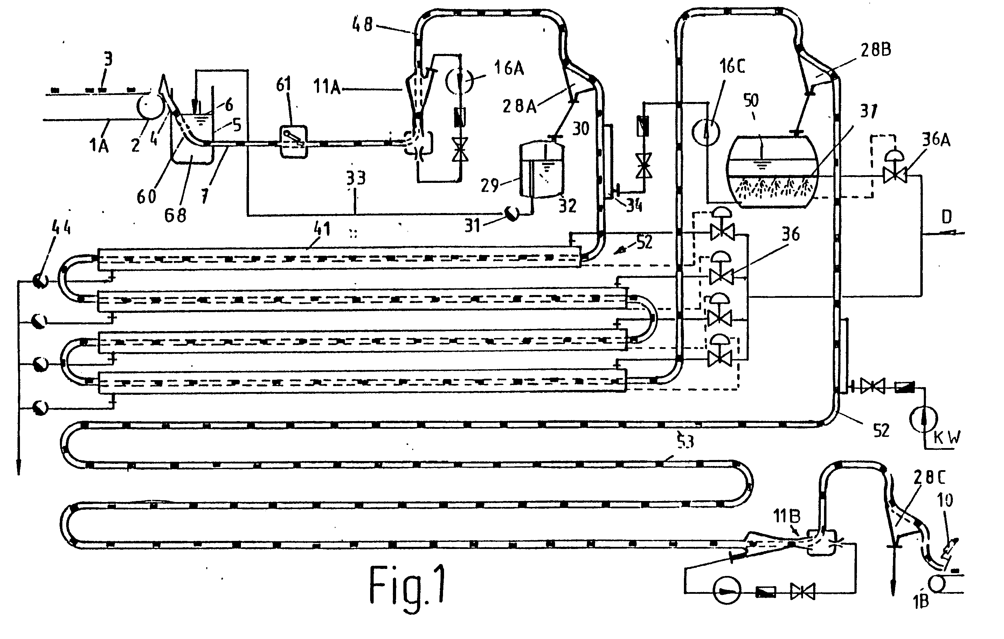

Damit sich der Druck im Rohr 48 nicht schlagartig verringern kann, wie dies bei einer schwankenden Förderleistung der Pumpe 16A oder bei einem Ausfall dieser Pumpe der Fall ist, ist in dem Einschleusrohr 7 eine Rückschlagklappe 61 eingebaut. Erzeugt die Pumpe 16A nicht mehr den geforderten Förderdruck, schließt die Rückschlagklappe 61, so daß der Druck der Transportf lüssigkeit erhalten bleibt und bei einer Erhitzung der Transportflüssigkeit über 100° C die Gefahr einer Dampfbildung verhindert wird, da die so erhitzte Transportf lüssigkeit aus der Beheizungsstrecke 52 sich nicht mehr über den Wasserabscheider 28A (Fig. 1) in Richtung auf das Einschleusrohr 7 entspannen kann.

Die Körper 3 gelangen über die Strahlpumpe 11A in das Rohr 48 und gleiten über das Luftpolster des Wasserabscheiders 28A hinweg. Die Transportflüssigkeit dieses ersten Kreislaufs strömt vom Wasserabscheider 28A über die Verbindungsleitung 30 in den Ausgleichsbehälter 29, von diesem über den Überlauf 32 und die Rücklaufleitung 33 in den eingangsseitigen Wasserkasten 5 zurück. Damit der Druck im Ausgleichsbehälter 29 erhalten bleibt, ist in die Rücklaufleitung 33 ein Schwimmer-Wasserableiter 31 eingebaut, aus dem das überschüssige Wasser unter Abschluß gegenüber der Außenluft austritt.

Der nächste Kreislauf beginnt am Eintrittsstutzen 34. Die Temperatur der Trägerflüssigkeit liegt hier in der Regel um 100° C. Diese Temperatur wird im Heißwassertank 50 durch direkte Einleitung von Dampf in den Heißwassertank 50 erzeugt. Über das temperaturgesteuerte Dampfmengenregulierventil 36A wird so viel Dampf durch das Dampfverteilerrohr 37 zugegeben, wie zum Erhalt der eingestellten Temperatur notwendig ist. Die heiße Flüssigkeit wird mittels der Pumpe 16C dem Heißwassertank 50 entnommen und am Eintrittsstutzen 34 der Beheizungsstrecke 52 zugeführt.

Infolge des übergangs der Wärme auf die Körper 3 im Rohr 48 sinkt die Temperatur der Trägerflüssigkeit. Um ihr erneut Wärme zuzuführen, wird über die Verteilerkästen 51 (Fig. 3) direkt Dampf in das Rohr 48 eingeleitet. Die Beheizung der Trägerflüssigkeit kann auch über eine Mantelrohrheizung erfolgen. Zu diesem Zweck ist das Rohr 48 von einem Mantelrohr 41 umgeben, in das über die Dampfmengenregulierventile 36 Dampf eingeleitet wird. Durch die Wand des Rohrs 48 wird die Transportflüssigkeit aufgeheizt, die ihre Wärme an die Körper 3 abgibt. Das anfallende Kondensat wird über die Kondensatableiter 44 abgeleitet und gesammelt.

Die Körper 3 durchlaufen die Beheizungsstrecke 52, in der beispielsweise der Inhalt der eine Verpackung darstellenden Körper 3 sterilisiert werden kann. Am Wasserabscheider 28B fließt die heiße Transportflüssigkeit wieder zurück in den Heißwassertank 50. Der an diesen Kreislauf anschließende Kreislauf kann ein Kühlkreislauf sein, in dem praktisch derselbe Betriebsdruck herrscht wie in der Beheizungsstrecke 52. In diesem Kreislauf durchlaufen die Körper 3 die Kühlrohre 53 und die einen Gegendruck erzeugende Strahlpumpe 11B, sowie eine am Ende des Rohrleitungssystems aus Sicherheitsgründen angebrachte Schnellschlußsicherheitsklappe 10 und werden am Wasserabscheider 28C von der Transportflüssigkeit getrennt, worauf sie auf das am Ende des Rohrleitungssystems angeordnete Förderband 1B gelangen. Die Kühlflüssigkeit wird in den Kühlwasserkreislauf zurückgeleitet.

Bei dem in Fig. 2 dargestellten Ausführungsbispiel sind innerhalb der Beheizungsstrecke 52 bei zwei Strahlpumpen 11D und 11E mit einander entgegengesetzter Strahlrichtung angeordnet, zwischen denen unabhängig vom Betriebsdruck in den übrigen Rohrleitungsabschnitten der Druck in weiten Grenzen geändert werden kann.

Bei den in den Figuren 1 und 2 dargestellten Ausführungbeispielen hat die Strahlpumpe 11A neben den Funktionen der Förderung der Transportflüssigkeit und der von ihr mitgeführten Körper 3 und des Druckaufbaus auch die Aufgabe, den unter Druck stehenden Teil des Rohrleitungssystems, also das an die Strahlpumpe 11A angeschlossene Transportrohr, gegenüber dein Einschleusrohr 7 bzw. gegenüber dem atmosphärischen Druck abzudichten Sind im Falle der thermischer Behandlung von kleinen Gegenständen die Rohrleitungsquerschnitte verhältnismäßig klein, sind die Trägheitskräfte der Transportflüssigkeit groß genug, um diese Abdichtung zu bewirken. Je größer die Rohrleitungsquerschnitte sind, desto schwieriger gestaltet sich eine derartige Flüssigkeitssperre.

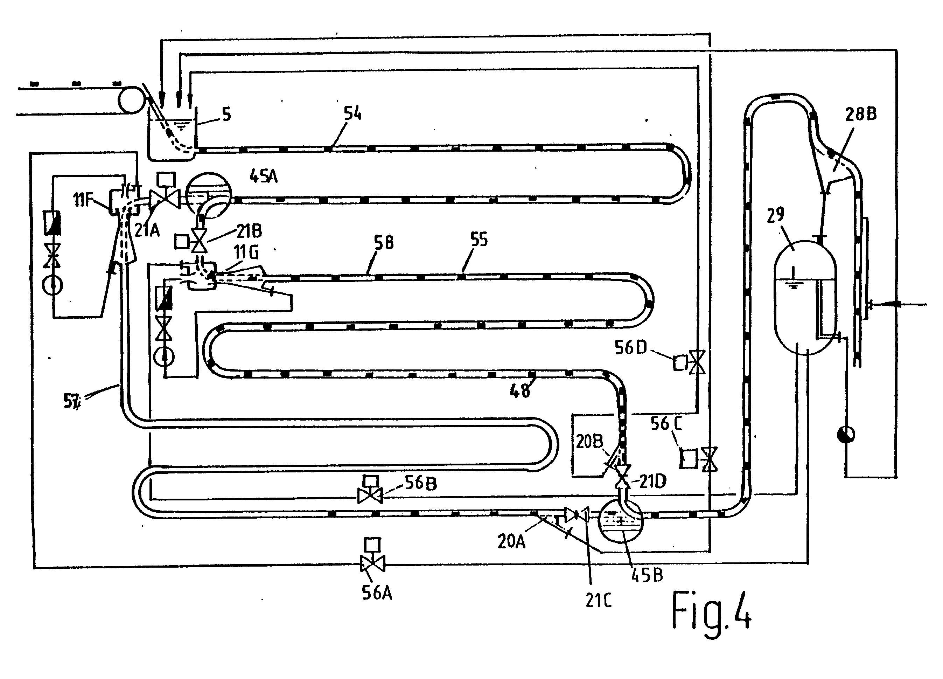

Das in Fig. 4 dargestellte Ausführungsbeispiel zeigt eine Vorrichtung, bei der diese Schwierigkeiten überwunden werden, so daß verhältnismäßig große Körper von einem unter Atmosphärendruck stehenden Transportrohr 54 in einen unter höherem Betriebsdruck stehenden Rohrleitungsabschnitt eingeschleust werden können, ohne daß eine der bekannten Schleusen, z. B. eine Zellenrad- oder Kammernschleuse, benötigt wird, bei denen rotierende Teile die Dichtungsfunktion erfüllen. Bei diesem Ausführungsbeispiel erfolgt das Eintragen der Körper 3 über eine Wegweiche 45A mit Schwenkbewegung, mittels der die Körper 3 taktweise in zwei etwa gleichlange Rohrleitungsabschnitte 57 und 58 geleitet werden. Der an die Wasserstrahlpumpe 11G angeschlossene Rohrleitungsabschnitt 58 ist in der Darstellung der Fig. 4 in der Stellung gezeichnet, in der er mit den Körpern 3 beladen wird. Die Körper 3 werden durch die Transportflüssigkeit bis vor den geschlossenen Schnellschlußschieber 21D gefördert. Vor diesem Schieber 21D ist im Rohr 48 ein Auslaßstutzen 20B angeordnet. Hier entweicht die Transportflüssigkeit und strömt durch das geöffnete automatisch gesteuerte Ventil 56D zurück in deen eingangsseitigen Wasserkasten 5, von wo sie durch die Wasserstrahlpumpe 11G angesaugt wird. Der Kreislauf der Trägerflüssigkeit erfolgt somit vom Wasserkasten 5 über das Transportrohr 54, die Wegweiche 45A, den geöffneten Schnellschlußschieber 21B, die Strahlpumpe 11G, den Transportrohrleitungsabschnitt 58, den Auslaßstutzen 20B, das geöffnete automatische Ventil 56D zurück in den Wasserkasten 5.

Der Arbeitstakt, der dem im Vorstehenden beschriebenen Takt des Beladens des Rohrleitungsabschnittes 58 vorangegangen ist, ist ebenfalls in Fig. 4 dargestellt. Es ist dies der Entleerungstakt des Rohrleitungsabschnittes 57. Während des Entladevorganges ist der Schnellschlußschieber 21A geschlossen. Dieser Schieber dichtet somit den unter Druck stehenden Rohrleitungsabschnitt 57 gegen den unter Atmosphärendruck und dem Förderdruck stehenden Transportrohr 54 ab. Die Wasserstrahlpumpe 11F saugt die Transportflüssigkeit aus dem Ausgleichsbehälter 29 an und drückt sie zusammen mit den Körpern 3 aus dem Rohrleitungsabschnitt 57 über den Wasserabscheider 28B in den nächsten, beispielsweise eine Beheizungsstrecke aufweisenden Kreislauf. Während dieses Vorgangs ist der Schnellschlußschieber 21C wie auch das automatische Ventil 56A geöffnet, während das automatische Ventil 56G geschlossen sein muß, damit der Druck aufrechterhalten wird.

Wenn nach einer gewissen Zeit, die berechnet oder über Sensoren angezeigt werden kann, der Entladevorgang des Rohrleitungsabschnittes 57 beendet ist, schließt der Schnellschlußschieber 21C und das automatische Ventil 56A so daß der Rohrleitungsabschnitt 57 von dem unter Druck stehenden Teil des Rohrleitungssystems getrennt ist.

In der Zeit, in der der Rohrleitungsabschnitt 57 entladen wird, wird der Rohrleitungsabschnitt 58 beladen, so daß diese Vorgänge gleichzeitig ihren Abschluß finden. Der Schnellschlußschieber 216 schließt, die bei den Wegweichen 45A und 45B schwenken um beispielsweise 180° um und geben somit jeweils den anderen Weg frei. Sodann öffnen die beiden Schnellschlußschieber 21A und 21B, wie auch die beiden automatische Ventile 56B und 56C, womit sich der Rohrleitungsabschnitt 57 wieder beladen und der Rohrleitungsabschnitt 58 wieder entladen kann.

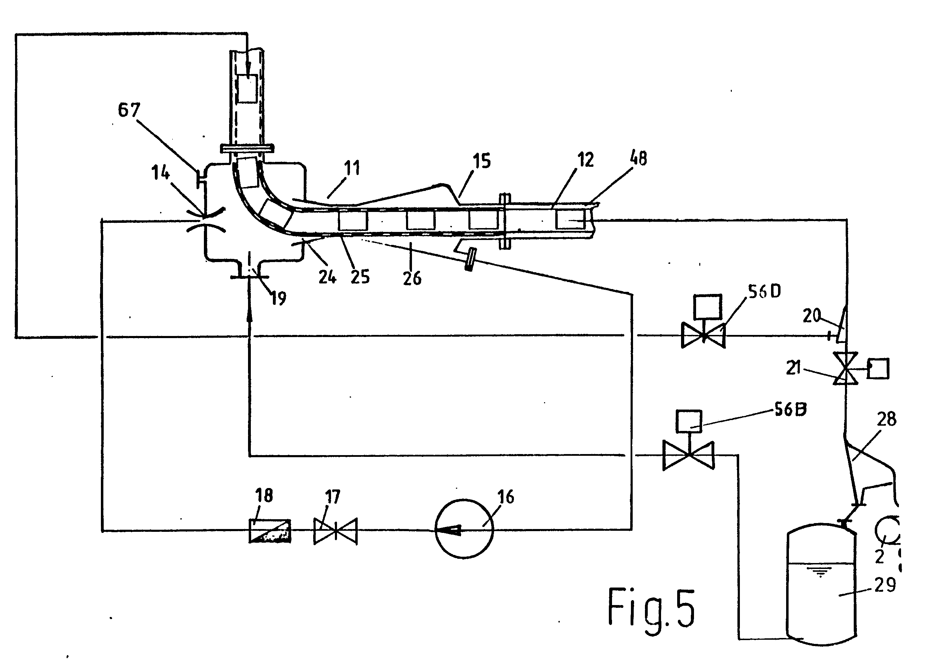

Da das Entladen und Beladen verhältnismäßig schnell erfolgen kann, ist diese Art des Einschleusens der Körper 3 sehr leistungsfähig. Hierzu wird allerdings eine Wasserstrahlpumpe besonderer Konstruktion benötigt, wie sie in Fig. 5 abgebildet ist. Zusätzlich zu der in Fig. 3 dargestellten Wasserstrahlpumpe weist die Kammer 49 dieser Pumpe einen weiteren Wassereintrittsstutzen 19 auf, durch den die Transportflüssigkeit für den Fall angesaugt wird, daß das Ventil 56D geschlossen und das Ventil 56B geöffnet ist. Dies entspricht dem in Fig. 4 dargestellten Fall des Entladens des Rohrleitungsabschnittes 58 bei geöffnetem Schnellchlußschieber 21D und geschlossenem Schnellschlußschieber 21B.

Dieser Wassereintrittsstutzen 19 ist strömungsgünstig so angeordnet, daß sich der aus der Treibdüse 14 austretende Strahl gut mit der angesaugten Flüssigkeit vermischen kann. Ein weiterer Anschluß 67 kann für einen Windkessel vorgesehen sein, der die Aufgabe hat, Druckpulsationen zu dämpfen, die dadurch entstehen können, daß die Körper 3 beim Durchlaufen der Kammer 49 (Fig. 5) und der Treibdüse 24 den druckerzeugenden Impulsaustausch von Saug- und Treibstrom verändern.

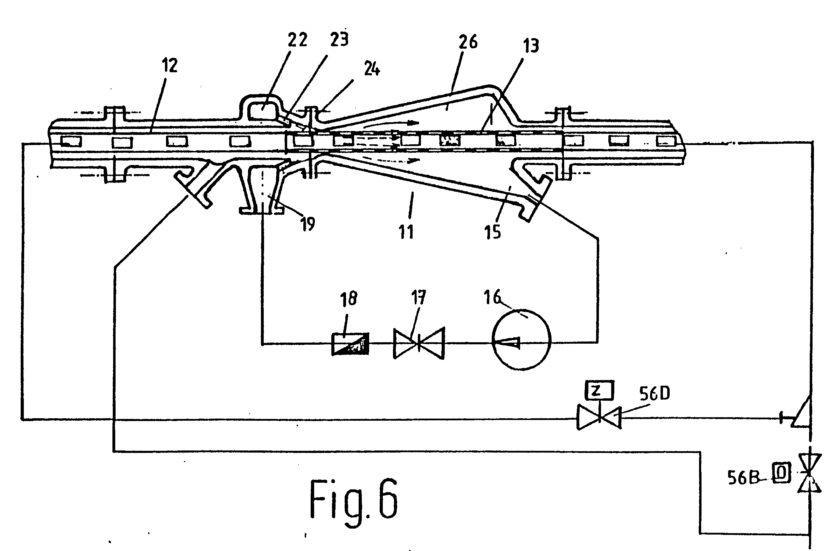

Bei dem in Fig. 6 dargestellten Ausführungsbeispiel ist die Strahlpumpe 11 in einen geradlinigen Abschnitt des Transportrohres eingebaut. Hierbei strömt die von der Pumpe 16 geförderte Treibflüssigkeit in einen Ringkanal 22 ein, der um die Führung 12 für die Körper 3 herum angeordnet ist. Anstelle einer einzigen Düse 14, wie im Falle des Ausführungsbeispiels gemäß Fig. 5, tritt eine größere Zahl kleiner Treibdüsen 23, die ringförmig oder in Form eines Rechtecks entsprechend der Querschnittsform des Transportrohres angeordnet sind. In der sich anschließenden Treibdüse 24 vermischt sich die Treibflüssigkeit mit der angesaugten Flüssigkeit. Im Bereich der sich verengenden Treibdüse 24 ist die Führung 12 für die Körper 3 wie die Führung 13 im Bereich des Diffusors 26 wieder offen ausgebildet, damit sich die Strömungen unter der Wirkung der Strahlpumpe frei ausbilden können.

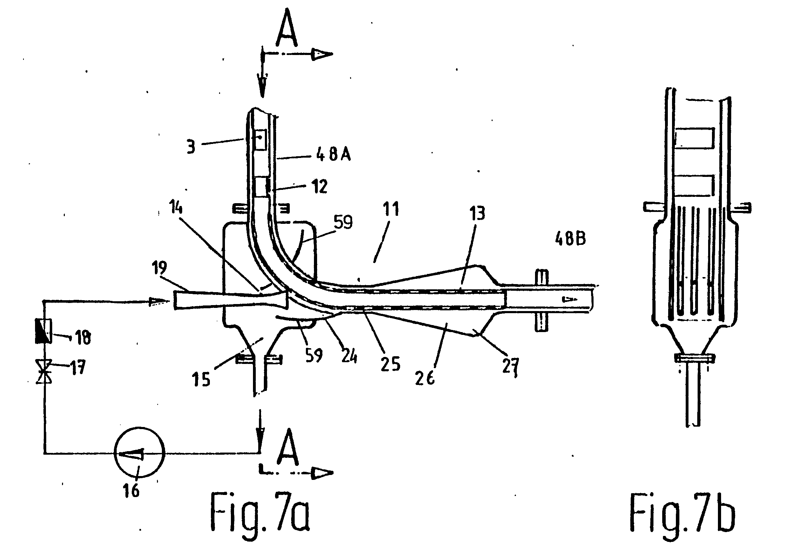

Bei der in den Fig. 7a und 7b dargestellten Wasserstrahlpumpe wird die Strömung der Transportflüssigkeit im Inneren des Transportrohres 48A nicht durch die mitreißende Kraft der Düse 14 erzeugt, sondern im gleichen Maße durch die im Wasserauslaßstutzen 15 de Stahlpumpe 11 sich ausbildende Absaugströmung Der Wasserauslaßstutzen 15 der Kammer ist daher an einer Stelle angeordnet, an der auch der Kanal der Düse 14 der Absaugströmung einen möglichst geringen Strömungswiderstand entgegensetzt. In der Ausugkammer sind Leitbleche 59 angeordnet, die die Aufgabe haben, die Wirkung der Düse 14 dadurch zu unterstützen, daß ein Teil der Ansaugströmung in Richtung der Treibflüssigkeit umgelenkt wird.

Die Führung 12 für die Körper 3, wie sie in Fig. 8 für den Fall eines Transportrohres mit reckteckigem Querschnitt dargestellt ist, besteht aus einem mehrfach abgebogenen Blechstreifen mit einem im wesentlichen U-förmigen Profil, an dessen Steg zwei Gleitwulste vorgesehen sind.

Bei dem in Fig. 10 dargestellten Ausführungsbeispiel sind die Voraussetzungen geschaffen, die die thermische Behandlung der Körper 3 unter Druck bei einer unter der Verdampfungstemperatur liegenden Temperatur ermöglichen. Die Transportfüssigkeit 68 wird beispielsweise durch direkte Einspritzung von Dampf in den Ausgleichsbehälter 29 mittels der Düsen des Dampfverteilerrohrs 37 aufgeheizt. Der erforderliche auf die Körper 3 wirkende Druck wird durch zwei einander entgegengesetzt wirkende Strahlpumpe 11A und 11B erzeugt, zwischen denen sich der druckbeaufschlagte Teil des Transportrohres 48 befindet. Zur Aufrechterhaltung des für den Transport der Körper 3 vom Förderband 1 bis zu dem hinter dem Wasserabscheider 28 angeordneten Förderband 1B notwendigen Druckgefälles wird mit der Strahlpumpe 11A ein Druck erzeugt, der größer ist als der mit der Strahlpumpe 11B erzeugte Gegendruck.

**Patentansprüche**

1. Anlage zum Transport von eine geometrisch definierte, einheitliche Form aufweisenden Körpern (3) in einem von Flüssigkeit durchströmten Rohr (48), in welcher mindestens eine Strahlpumpe (11, 11A) mit einstellbarem Treibmitteldruck an eineder Einschleusung der zu Transportierenden Körper (3) dienendes Einschleusrohr (7) angeschlossen ist, dadurch gekennzeichnet, daß
- in der Strahlpumpe (11, 11A) eine von deren sich verengender Düse (24) über die zylindrische Fangdüse (25) bis zum Ende des Diffusors (26) sich erstreckende, in eine an den Diffusor (26) angeschlossene Rohrleitung (48) mündende, Flüssigkeitsdurchlässe aufweisende Führung (12, 13, 62, 63, 80) für die zu transportierenden Körper (3) angeordnet ist,
- am Ende des Diffusors (26) der Strahlpumpen (11, 11A) ein Wasserauslaßstutzen (15, 64) für die der Düse (24, 14) wieder zugeführte Treibflüssigkeit angeordnet ist, und
- eine Teilstrecke des Rohrleitungssystems ein von einer Wärmequelle beufschlagtes Mantelrohr (41) aufweist.

2. Anlage nach Anspruch 1, dadurch gekennzeichnet, daß im Kreislauf der Treibflüssigkeit der Strahlpumpe (11A) eine Pumpe (16A) und ein Regulierventil (17A) angeordnet sind.

3. Anlage nach Anspruch 1, dadurch gekennzeichnet, daß in dem Rohrleitungssystem zum Zweck der Aufrechterhaltung unterschiedlicher Flüssigkeitsdrucke mehrere Strahlpumpen (11, 11A, 11B) mit in Strömungsrichtung wirkendem und/oder der Strömungsrichtung entgegenwirkendem Strahl angeordnet sind.

4. Anlage nach einem der Ansprüche 1 bis 3, dadurch gekennzeichnet, daß die in dem Treibflüssigkeitskreislauf zweier Strahlpumpen (11, 11A, 11B) mit in einander entgegengesetzter Richtung wirkendem Treibstrahl eingebauten Reguliervorrichtungem (17, 17A, 17B) so miteinander koppelbar sind, daß sich die Mengen der die Kreisläufe durchströmenden Flüssigkeit um denselben Betrag ändern.

5. Anlage nach einem der Ansprüche 1 bis 4, dadurch gekennzeichnet, daß an dem Treibflüssigkeitskreislauf eine ein Regulierventil (17C) aufweisende Druck- oder Saugleitung (66) angeschlossen ist.

6. Anlage nach Anspruch 1, dadurch gekennzeichnet, daß die Führung der zu Transportierenden Körper (3) durch Flach- und/oder Rundstäbe (62, 63) gebildet wird, deren Anordnung dem Querschnitt der zu transportierenden Körper (3) mit Spiel angepasst ist.

7. Anlage nach Anspruch 1, dadurch gekennzeichnet, daß die Entnahmeöffnung (64) für die Treibflüssigkeit der Strahlpumpe (11B) auf der der Kammer (49) gegenüberliegenden Seite angeordnet ist und in der Kammer (49) Leitbleche (59) angeordnet sind, die die aus der Düse (14) austretende Flüssigkeit in Richtung auf den Diffusor (26) und die angesaugte Transportflüssigkeit in Richtung auf die Fanggdüse (25) lenken.

8. Anlage nach Anspruch 1, dadurch gekennzeichnet, daß die Kammer (49) der Strahlpumpe (11A) einen Eintrittsstutzen (19) etwa gleicher Größe wie die Ansaugöffnung für die Transportflüssigkeit aufweist und an diesen Eintrittsstutzen (19) eine Rückleitung für die Transportflüssigkeit angeschlossen ist, die einem am Ende des Rohrleitungssystems angeordneten Ausgleichsbehälter (29) entnommen wird.

9. Anlage nach einem der Ansprüche 1 bis 8, dadurch gekennzeichnet, daß die Kammer (49) der Strahlpumpen (11, 11A) einen Anschluß (67) für einen Windkessel aufweist.

## Claims

1. System for moving objects (3) of a geometrically defined, uniform shape in a conduit (48) through which liquid is flowing, wherein at least one jet pump (11, 11A) with adjustable propellant pressure is connected to a charge pipe (7) serving to charge the objects (3) to be moved, <u>characterised in that</u>
- there is arranged in the jet pump (11, 11A) a guide (12, 13, 62, 63, 80) for the objects (3) to be moved, said guide extending from the narrowing nozzle (24) of said jet pump via the cylindrical capture nozzle (25) as far as the end of the diffuser (26), terminating in a pipe conduit (48) connected to the diffuser (26), and exhibiting passages for the liquid;
- at the end of the diffuser (26) of the jet pumps (11, 11A) is arranged a water outlet connector (15, 64) for the propel ling liquid fed back to the nozzle (24, 14), and
- a sub-section of the pipe conduit system exhibits a tubular jacket (41) subjected to heat from a heat source.

2. System according to claim 1, <u>characterised in that</u> a pump (16A) and a regulating valve (17A) are arranged in the circuit of the propelling liquid from the jet pump (11A).

3. System according to claim 1, <u>characterised in that</u> a plurality of jet pumps (11, 11A, 11B) are arranged in the pipe conduit system for the purpose of maintaining different pressures of liquid, said jet pumps operating with a jet in the direction of flow and/or against the direction of flow.

4. System according to one of claims 1 to 3, <u>characterised in that</u> the regulating devices (17, 17A, 17B) installed in the propelling liquid circuit of two jet pumps (11, 11A, 11B) having propelling jets acting in opposite directions to one another can be so coupled together as to alter by the same amount the quantities of liquid flowing through the circuits.

5. System according to one of claims 1 to 4, <u>characterised in that</u> a pressure or intake line (66) exhibiting a regulating valve (17C) is arranged on the propelling liquid circuit.

6. System according to claim 1, <u>characterised in that</u> the guide for the objects (3) being moved is formed by flat and/or circular bars (62, 63), the arrangement of which loosely fits the cross-section of the objects (3) being moved.

7. System according to claim 1, <u>characterised in that</u> the opening (64) for removing the propelling liquid from the jet pump (11B) is arranged on the side opposite the chamber (49) and guide plates (59) are arranged in the chamber (49) which guide the liquid emerging from the nozzle (14) towards the diffuser (26) and guide the indrawn conveyor liquid towards the capture nozzle (25).

8. System according to claim 1, <u>characterised in that</u> the chamber (49) of the jet pump (11A) exhibits an inlet connector (19) roughly equal in size to the intake opening for the conveyor liquid and to this inlet connector (19) is connected a return for the conveyor liquid that is removed from a compensating tank (29) arranged at the end of the pipe conduit system.

9. System according to one of claims 1 to 8, <u>characterised in that</u> the chamber (49) of the jet pumps (11, 11A) exhibits a connection (67) for an air dome.

## Revendications

1. Installation pour le transport d'objets (3) présentant une forme homogène, géométriquement définie, dans un tuyau (48) qui est traversé par du liquide et dans lequel au moins une pompe à jet (11, 11A) présentant une pression d'agent moteur ajustable est raccordée à un tuyau d'éclusage (7) servant à l'éclusage des objets (3) à transporter, caractérisée en ce que
- un guidage (12, 13, 62, 63, 80) pour les objets à transporter (3) est agencé dans la pompe à jet (11, 11A), ce guidage s'étendant depuis l'ajutage de pompe (24) qui se retrécit jusqu'à l'extrémité du diffuseur (26) en passant par l'ajutage collecteur cylindrique (25), débouchant dans un conduit tubulaire (48) raccordé au diffuseur (26) et présentant des passages pour le liquide,
- une tubulure de sortie d'eau (15, 64) pour le liquide moteur ramené à l'ajutage (24, 14) est agencée à l'extrémité du diffuseur (26) de la pompe à jet (11, 11A), et
- une section du parcours du système de conduits tubulaires présente une enveloppe tubulaire (41) alimentée par une source de chaleur.

2. Installation suivant la revendication 1, caractérisée en ce qu'une pompe (16A) et une soupape de réglage (17A) sont agencées dans le circuit du liquide moteur de la pompe à jet (11A).

3. Installation suivant la revendication 1, caractérisée en ce que, en vue de maintenir des pressions de liquide différentes, plusieurs pompes à jet (11, 11A, 11B), comportant un jet agissant dans le sens de l'écoulement et/ou dans le sens opposé à celui de l'écoulement, sont agencées dans le système de conduits tubulaires.

4. Installation suivant l'une des revendications 1 à 3, caractérisée en ce que les dispositifs de réglage (17, 17A, 17B) incorporés dans le circuit de liquide moteur de deux pompes à jet (11, 11A, 11B), comportant un jet de propulsion agissant dans des sens mutuellement opposés, peuvent être mutuellement accouplés de façon que les quantités du liquide passant à travers les circuits se modifient de la même valeur.

5. Installation suivant une des revendications 1 à 4, caractérisée en ce qu'un conduit de refoulement ou d'aspiration (66) présentant une soupape de réglage (17C) est raccordé au circuit de liquide moteur.

6. Installation suivant la revendication 1, caractérisée en ce que le guidage des objets (3) à transporter est formé par des barres à section

**0 139 780**

plate et/ou circulaire (62, 63) dont l'agence ment est adapte avec jeu à la section transversale des objets (3) à transporter.

7. Installation suivant la revendication 1, caractérisée en ce que l'ouverture de prélèvement (64) destinée au liquide moteur de la pompe à jet (11B) est agencée du côté opposé à la chambre (49) et en ce que dans la chambre (49) sont agencés des déflecteurs (59) qui dévient le liquide sortant de l'ajutage (14) en direction du diffuseur (26) et le liquide de transport aspiré en direction de l'ajutage collecteur (25).

8. Installation suivant la revendication 1, caractérisée en ce que la chambre (49) de la pompe à jet (11A) présente une tubulure d'entrée (19) qui a environ la même dimension que l'ouverture d'aspiration du liquide de transport et en ce que sur cette tubulure d'entrée (19) est raccordé un conduit de retour pour le liquide de transport qui est prélevé à un récipient de compensation (29) agencé à l'extrémité du système d conduits tubulaires.

9. Installation suivant l'une des revendications 1 à 8, caractérisée en ce que la chambre (49) des pompes à jet (11, 11A) présente un raccord (67) pour un reservoir d'air.

Fig.1

Fig.2

Fig. 3

0 139 780

Fig.4

0 139 780

Fig.5

0 139 780

Fig. 6

0 139 780

Fig.7a

Fig.7b

0 139 780

0 139 780

Fig.8

12

Fig.9

13

63

62

Fig.10